# EUROPÄISCHE PATENTSCHRIFT

(11) **EP 1 709 055 B1**
(45) Veröffentlichungstag und Bekanntmachung des Hinweises auf die Patenterteilung: **30.07.2008**
(21) Anmeldenummer: 05799749.6
(22) Anmeldetag: 04.11.2005
(51) Int. Cl.: C07F 9/6571

(54) **AMINODERIVATE VON DIBENZ[C,E][1,2]-OXAPHOSPHORIN-6-OXIDEN, VERFAHREN ZU IHRER HERSTELLUNG UND VERWENDUNG**
AMINO DERIVATIVES OF DIBENZ[C,E][1,2]-OXAPHOSPHORINE-6-OXIDES METHOD FOR PRODUCTION AND USE THEREOF
DERIVES AMINO DE DIBENZ[C,E][1,2]-OXAPHOSPHORINE-6-OXYDES, PROCEDE POUR LES PRODUIRE ET UTILISATION DE CEUX-CI

(30) Priorität: 09.02.2005 DE 102005005862
(43) Veröffentlichungstag der Anmeldung: 11.10.2006
(73) Patentinhaber: Schill + Seilacher "Struktol" Aktiengesellschaft, 22113 Hamburg (DE)
(72) Erfinder: JUST, Berthold, 22397 Hamburg (DE); Dr. DITTRICH, Uwe, 01445 Radebeul (DE); Dr. KELLER, Holger, 21391 Reppenstedt (DE); DÖRING, Manfred, 76744 Wörth-Büchelberg (DE); CIESIELSKI, Michael, 06217 Merseburg (DE); Dr.STORZER, Uwe, 72076 Tübingen (DE)
(74) Vertreter: Bunke, Holger
(86) Internationale Anmeldenummer: PCT/EP2005/011832
(87) Internationale Veröffentlichungsnummer: WO 2006/084489

(56) Entgegenhaltungen:
- DE-A1- 2 034 887
- DE-A1- 2 646 218
- DE-C1- 19 522 876
- US-A- 4 742 088
- US-A1- 2003 120 021
- DATABASE CA [Online] CHEMICAL ABSTRACTS SERVICE, COLUMBUS, OHIO, US; MIZUKURA, NOBORU ET AL: "Method for prevention of light-induced fading and silver halide color photographic material containing color image stabilizer" XP002361689 gefunden im STN Database accession no. 1992:417188 -& JP 04 029237 A (KONICA CO., JAPAN) 31. Januar 1992 (1992-01-31)
- LIU Y-L ET AL: "PHOSPHORUS-CONTAINING EPOXY FOR FLAME RETARDANT. III: USING PHOSPHORYLATED DIAMINES AS CURIN AGENTS" JOURNAL OF APPLIED POLYMER SCIENCE, JOHN WILEY AND SONS INC. NEW YORK, US, Bd. 64, Nr. 7, 14. Februar 1997 (1997-02-14), Seiten 895-901, XP000722893 ISSN: 0021-8995 in der Anmeldung erwähnt
- PATENT ABSTRACTS OF JAPAN Bd. 2003, Nr. 02, 5. Februar 2003 (2003-02-05) -& JP 2002 284850 A (SANKO KK), 3. Oktober 2002 (2002-10-03)
- WANG ET AL.: "Properties and Curing Kinetic of Diglycidyl Ether of Bisphenol A Cured with a Phosphorus-Containing Diamine" J. APPL. POLYM. SCI., Bd. 74, 1999, Seiten 1635-1645, XP002361687 in der Anmeldung erwähnt

## Beschreibung

Die Erfindung betrifft aminofunktionalisierte Derivate von Dibenz[c,e][1,2]-oxaphosphorin-6-oxiden, Verfahren zu ihrer Herstellung und ihre Verwendung als reaktive Flammschutzmittel für Polymere, wie z.B. Polyester, Polyamide und Epoxidharze, und daraus hergestellte Erzeugnisse sowie als Härter für Epoxidharze.

Dibenz[c,e][1,2]-oxaphosphorin-6-oxid, auch 9,10-Dihydro-9-oxa-10-phospha-phenanthren-10-oxid oder kurz "DOP" genannt, und seine Derivate sind seit langem als wirksame reaktive Flammschutzmittel für Polymere bekannt (vgl. z. B. DE 2034887 C3, DE 2646218 A1, DE 19522876 C1). Unter "reaktiven Flammschutzmitteln" sind solche zu verstehen, die als Comonomere bei der Polymerisation, insbesondere Polykondensation, direkt in die Polymerketten eingebaut werden.

Aus der Literatur sind Aminoderivate von Arylphosphanoxiden (J. Appl. Polym. Sci. 1997, 63, 895), Phosphorsäurearylestem (J. Polym. Sci. A: Polym. Chem. 1997, 35, 565), und Phosphazenen (J. Appl. Polym. Sci. 1998, 67, Seite 461 / Progr. Polym. Sci. 2002, 27, Seite 1680) als reaktive Flammschutzmittel und als Härter in Epoxidharzformulierungen bekannt (Polymer Degr. Stab. 1998, 60, 169).

Aufgrund der ausgewiesenen Flammschutzwirkung der Dibenz[c,e][1,2]-oxaphosphorin-6-oxide wurden auch schon Aminoderivate dieser Verbindungen untersucht, beispielsweise eine Reihe unterschiedlicher 6-Aminomethyl-Derivate (JP 2003-105058, JP 2002-284850, US 4742088), die allesamt durch Aminomethylierung des 6H-Dibenz[c,e][1,2]-oxaphosphorin-6-oxids mittels Formaldehyd und potentieller Härter-Amine erzeugt wurden. Der Nachteil dieser flammgeschützten aminischen Härter besteht in der Reduktion ihrer Aktivitätdurch das synthesebedingte Vorhandensein primärer und/oder weniger reaktiver sekundärer Amine -- für die Polyaddition mit Epoxidharzen und die dadurch bedingten negativen Auswirkungen auf die Polymereigenschaften und Verarbeitungstechnologien. Auch wurden difunktionelle primäre Amine des Dibenzoesäureesters des DOP-Hydrochinons (J. Appl. Polym. Sci. 1999, 74, 1635) als Härter für Epoxidharze beschrieben, die jedoch aufwendig hergestellt werden müssen und keinerlei Variationen beim Härtungsprozess zulassen.

Es wurden jedoch bisher keine Aminoderivate der Dibenz[c,e][1,2]-oxaphosphorin-6-oxide beschrieben, bei denen eine oder mehrere Aminogruppen (-NH₂) direkt an das heterocyclische Phospha-oxa-phenanthren-Ringsystem gebunden sind.

Der Erfindung liegt die Aufgabe zugrunde, solche direkt aminosubstituierte Dibenz[c,e][1,2]-oxaphosphorin-6-oxide bereitzustellen und ein Verfahren zu ihrer Herstellung und Verwendung anzugeben. Es ist insbesondere ein Ziel der Erfindung, primäre aminische Härter auf Basis des kommerziell verfügbaren und für seine gute Flammschutzwirkung bekannten 6H-Dibenz[c,e][1,2]-oxaphosphorin-6-oxids zu entwickeln, welche auf einfachem und kostengünstigem Wege zugänglich und so variierbar sind, dass ihre härtende Wirkung die angestrebten Polymereigenschaften nicht negativ beeinflußt.

Diese Aufgabe wird erfindungsgemäß gelöst durch die Verbindungen der Patentansprüche 1 bis 8, die den allgemeinen Formeln I und II entsprechen, sowie durch die Verfahren zu ihrer Herstellung gemäß den Patentansprüchen 9 bis 11 und deren Verwendung als reaktive Flammschutzmittel für Polymere und daraus hergestellte Erzeugnisse sowie als Härter für Epoxidharze.

Die phosphorhaltigen Amine nach der Erfindung sind Verbindungen der Formeln **I** und **II.** Die NH₂ -Gruppierungen in diesen Aminen können sich sowohl in der para-Position bezüglich der Brücken-Sauerstoffatome befinden als auch in der ortho-Position. Vorzugsweise befinden sie sich in der para-Position (4-Stellung). Gegebenenfalls können sie sich auch in beiden Positionen befinden. Die Verbindungen der Formel **II** können zwei DOP-Einheiten pro Molekül (y=1) aufweisen und werden dann als "difunktionell" bezeichnet, oder sie können drei DOP-Einheiten pro Molekül aufweisen (y=2) und werden dann als "trifunktionell" bezeichnet. 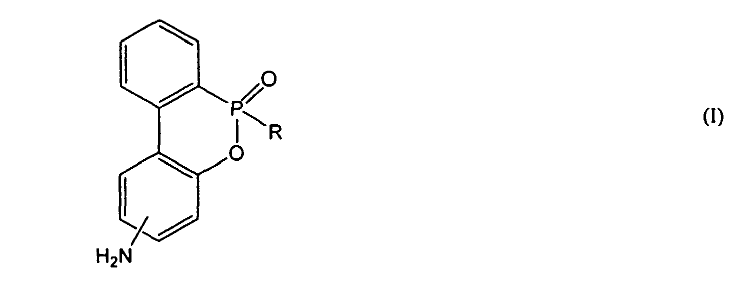
R = H, (CH₂)ₘCH₃, (CH₂)ₙO(CH₂)ₘCH₃, 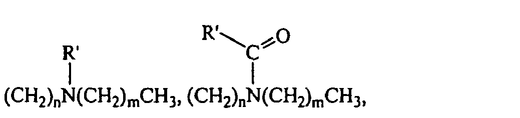 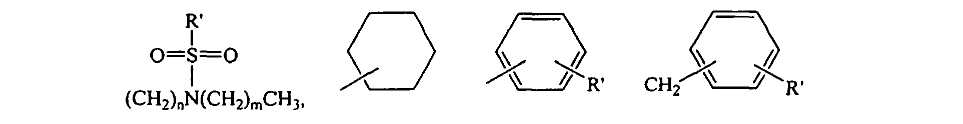
m=0-20;n=1-10;R'=alkyl,aryl 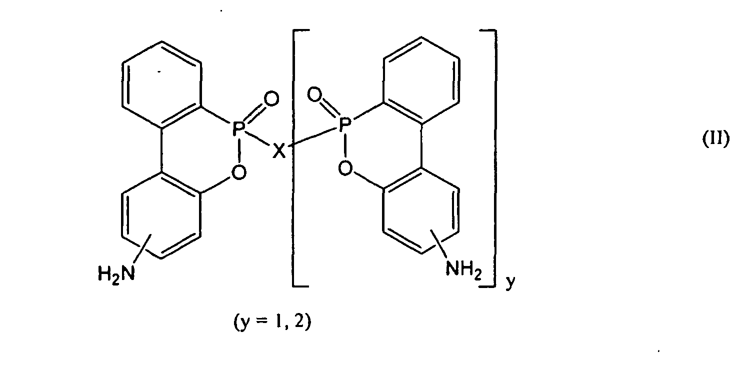 difunktionell (y = 1):
R = (CH₂)ₙ, (CH₂)ₙO(CH₂)ₘ, 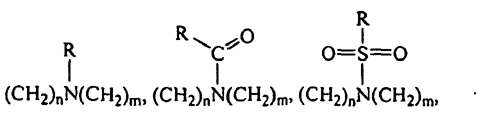 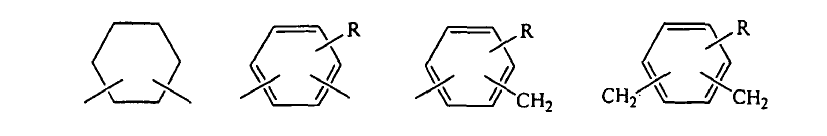 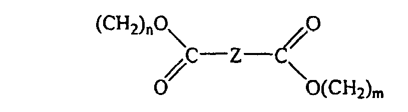 (CH₂)ₙO-Z-O(CH₂)ₘ
n, m = 1 - 10, R = alkyl, aryl
Z = aliphatische, cycloaliphatische oder aromatische Brücken trifunktionell (y =2): 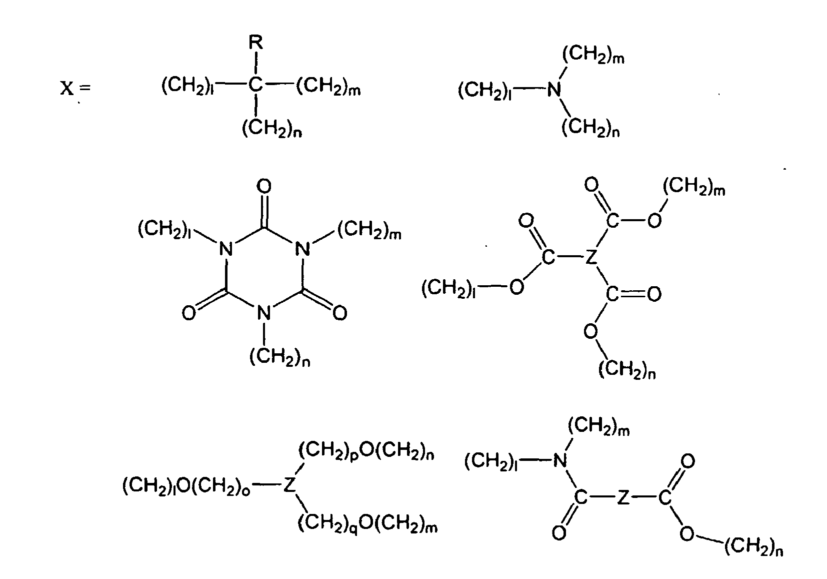
R = alkyl, aryl; l, m, n = 1 - 10; o, p, q = 0 - 10;
Z = aliphatische, cycloaliphatische und aromatische Brücken

Zur Herstellung der Aminoderivate **I** und **II** werden zunächst die entsprechenden Nitroderivate **IV** und **VI**, deren Substituenten R bzw. X eine der bei den Formeln **I** und **II** angegebenen Bedeutungen haben, durch direkte Nitrierung des 6H-Dibenz[c,e][1,2]-oxaphosphorin-6-oxids bzw. seiner Derivate **III** und **V,** deren Substituenten R bzw. X eine der bei den Formeln **I** und **II** angegebenen Bedeutungen haben, mit unterschiedlich starker Nitriersäure hergestellt. Typischerweise werden dabei ca. 75% der Nitrogruppen in die para-Position (4-Stellung) bezüglich des Brücken-Sauerstoffatoms und ca. 15% der Nitrogruppen in die entsprechende ortho-Position (2-Stellung) eingeführt. In geringem Umfang entstehen auch die in beiden Positionen nitrierten Produkte.

Anschließend werden die Nitroderivate **IV** und **VI** nach an sich bekannten Verfahren der Reduktion aromatischer Nitroverbindungen in die Aminoderivate **I** und **II** übergeführt. Vor oder nach der Reduktion kann eine Trennung der Regio-Isomeren erfolgen. 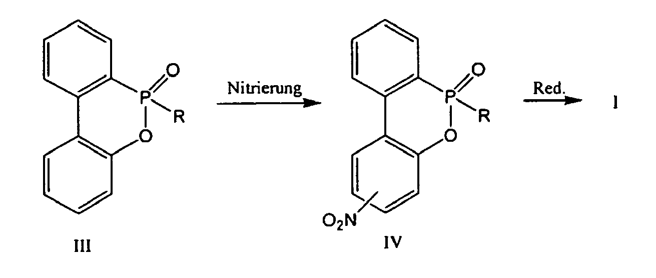 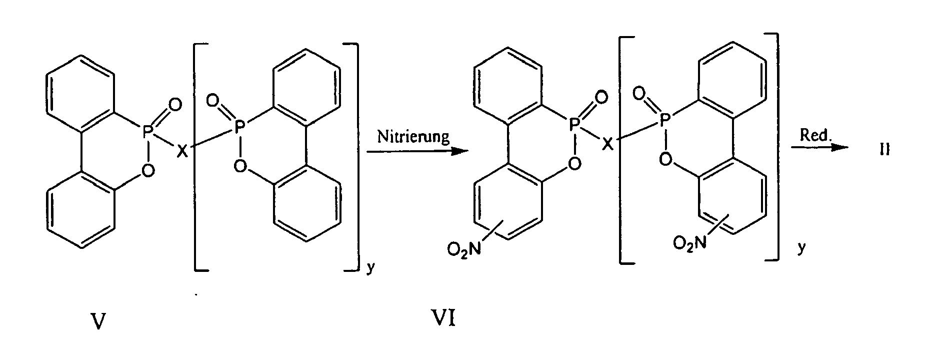 (worin R, X und y die bei den Formeln **I** und **II** angegebenen Bedeutungen haben)

Einige der zur Herstellung von **II** benötigten difunktionellen DOP-Derivate **V** (y = 1) können entsprechend der Patentschrift JP 11106619 dargestellt werden.

Eine andere Methode zur Herstellung dieser difunktionellen Derivate der Formel **V** besteht darin, DOP oder ein Derivat desselben in Gegenwart von mindestens einem ein- oder mehrwertigen Alkohol mit mindestens einem Orthocarbonsäureester unter Bildung eines ersten Zwischenprodukts (a) umzusetzen, das Zwischenprodukt (a) ggf. mit mindestens einem weiteren ein- oder mehrwertigen Alkohol unter Bildung eines weiteren Zwischenprodukts (b) umzusetzen und eines der Zwischenprodukte (a) oder (b) durch Zugabe katalytischer Mengen eines Alkylierungsmittels in das entsprechende 6H-Dibenz[c,e][1,2]-oxaphosphorin-6-oxid-6-organyl-Derivat überzuführen.

Die Synthese di- und trifunktioneller stickstoffhaltiger Derivate der Formel V (y = 1, 2) geht aus von z. B. aus DE 10206982 A1 bekannten 6-Alkoxy-[6H]-dibenz[c,e][1,2]oxaphosphorinen, die mit polyfunktionellen Alkoholen umgesetzt und danach einer intramolekularen Michaelis-Arbuzov-Reaktion unterworfen werden.

Die erfindungsgemäßen Aminoderivate werden als reaktive Flammschutzmittel für Polymere, insbesondere für Polyester, Polyamide und Epoxidharze verwendet. Gleichzeitig fungieren sie als Härter für Epoxidharze.

Besonders vorteilhaft können die erfindungsgemäßen Verbindungen Epoxidharzmaterialien für Elektronikanwendungen, aber auch für den Einsatz als Verbundwerkstoffe in Flug- und Fahrzeugen, wie auch dem Schiffsbau, mit einem höchstmöglichen Flammschutz unter Beibehaltung geforderter Materialeigenschaften ausstatten. Dies gelang bisher in vielen Fällen deshalb nicht, weil durch Einsatz sekundärer aminischer DOP-Härter zwar eine flammhemmende Wirkung erzielt wird, gleichzeitig aber das Polymernetzwerk in ausgehärteten Epoxidharzen gestört und damit die Materialeigenschaften negativ verändert werden.

Die Erfindung wird nachfolgend anhand der Beispiele weiter erläutert:

### Beispiel 1

### Herstellung von IVa (R=Ethyl):

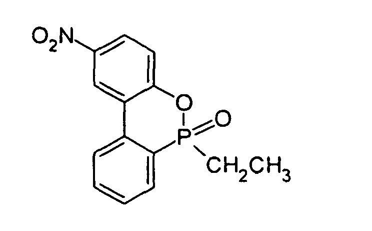

In einem 500ml Dreihals-Rundkolben, der mit einem Magnetrührer, einem Thermometer, einem Tropftrichter sowie einer Gasableitung ausgerüstet ist, werden 24,42g (0,1 mol) **IIIa** mit 100g Essigsäureanhydrid vermischt. Zu der auf 15°C gekühlten Suspension werden unter kräftigem Rühren 31,5g (0,5 mol) 100%ige Salpetersäure getropft, wobei die Temperatur der Mischung bei 15-20°C gehalten wird und sich der Ausgangsstoff auflöst. Nach Beendigung des Zutropfens wird die Lösung im Verlauf von 2h auf 45°C erwärmt. Diese Temperatur wird noch weitere 3h gehalten, wobei eine mäßige Freisetzung nitroser Gase auftritt. Anschließend wird die braune Lösung in ca. 600g Eis gerührt. Nach dem Schmelzen des Eises wird die ausgeschiedene gelbe Substanz in 200ml Chloroform gelöst und die wässrig-salpetersaure Lösung wird zweimal mit jeweils 100ml Chloroform extrahiert. Dann werden die vereinigten organischen Lösungen mit 100ml Wasser gewaschen und über wasserfreiem Natriumsulfat getrocknet. Nach dem Entfernen des Trockenmittels und dem Abdestillieren des Chloroforms wird ein bräunlich-gelber Feststoff erhalten. Dieser Feststoff wird 2 h im Vakuum auf 120°C erwärmt. Er besteht zu etwa 70% aus dem Para-Isomer **IVa.** Zudem enthält er das entsprechende Ortho-Isomer (ca.15%) und geringe Anteile weiterer Regio-Isomere und dinitrierter Produkte. Zur Isolierung von **IVa** wird der Feststoff in 100ml siedendem Ethanol gelöst. Die ethanolische Lösung wird langsam bis auf 0°C gekühlt, wobei sich **IVa** in ca. 90%iger Reinheit ausscheidet. Die Substanz wird abfiltriert und erneut aus Ethanol umkristallisiert. Danach wird sie 2 h im Vakuum auf 120°C erwärmt. Erhalten werden 12,6 g (43%) **IVa** mit einem Schmelzpunkt von 189-190,5°C.

### Herstellung von Ia (R=Ethyl)

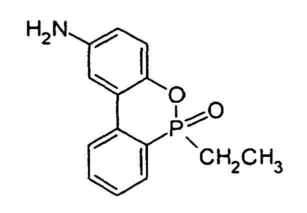

In einen mit Stickstoff gefüllten Rührautoklaven mit 300 ml Volumen werden 11,57g (0,040 mol) erfindungsgemäß hergestelltes **IVa** sowie 150 ml Ethanol, 50ml THF und 0,5g Palladium-Kohle (Pd-Gehalt 10%) gegeben. Dann wird der Stickstoff durch Wasserstoff verdrängt, der Rührer angestellt, ein Überdruck von 3 bar erzeugt und auf 40 °C erwärmt. Es wird 15 h unter Rühren hydriert, wobei ein Überdruck von 3 bar durch automatisches Nachdosieren von Wasserstoff (max. 10 ml / min) aufrechterhalten wird. Die Reaktionstemperatur von 40°C wird mit einem Thermostaten konstant gehalten. Zum Ende der Reaktionszeit ist keine Wasserstoffaufnahme mehr zu beobachten. Nach der Reaktion wird der Wasserstoff wieder durch Stickstoff ersetzt und die noch warme Mischung aus dem Autoklaven entnommen. Anschließend wird sie unter Inertbedingungen durch eine ca. 2 cm dicke Schicht Kieselgel filtriert um den Katalysator vollständig zu entfernen. Danach wird das Lösungsmittelgemisch abdestilliert, und der Rückstand wird 2 h im Feinvakuum auf 120°C erwärmt. Erhalten werden 10,1g hellbraunes Rohprodukt, in welchem die Substanz **Ia** zu 95% enthalten ist. Das Rohprodukt wird aus Isopropanol umkristallisiert. Es werden 9.33 g reines **Ia** mit einem Schmelzpunkt von 157-159°C isoliert (90% Ausbeute).

### Beispiel 2

### Herstellung von IVb (R=Decyl):

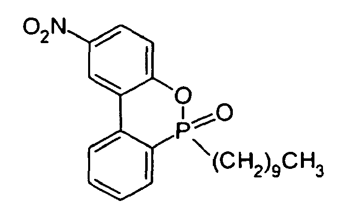

In einem 500ml Dreihals-Rundkolben, der mit einem Magnetrührer, einem Thermometer, einem Tropftrichter sowie einer Gasableitung ausgerüstet ist, werden 45,0g (0,126 mol) **IIIb** mit 150g Essigsäureanhydrid und 50g Eiseesig vermischt. Zu der auf 10°C gekühlten Mischung werden unter kräftigem Rühren 31,5g (0,5 mol) 100%ige Salpetersäure getropft, wobei die Temperatur der Mischung bei 15-20°C gehalten wird. Nach Beendigung des Zutropfens wird die Lösung im Verlauf von 2 h auf 45°C erwärmt. Diese Temperatur wird noch weitere 6 h gehalten, wobei eine mäßige Freisetzung nitroser Gase auftritt. Anschließend wird die braune Lösung in eine Mischung aus ca. 500g Eis und 50g Natriumchlorid gerührt. Nach dem Schmelzen des Eises wird die ausgeschiedene Substanz in 200ml Essigsäureethylester gelöst und die wässrig-salpetersaure Lösung wird zweimal mit jeweils 150ml Essigsäureethylester extrahiert. Dann werden die vereinigten organischen Lösungen mit 150ml Wasser gewaschen und über wasserfreiem Natriumsulfat getrocknet. Nach dem Entfernen des Trockenmittels und dem Abdestillieren des Lösungsmittels wird ein brauner Rückstand erhalten. Dieser wird 2 h im Vakuum auf 120°C erwärmt. Er besteht zu etwa 50% aus dem Para-Isomer **IVb.** Zudem enthält er neben unumgesetztem Ausgangsstoff das entsprechende Ortho-Isomer (ca.15%) sowie geringe Mengen anderer Regio-Isomere und dinitrierter Produkte. Dieser Rückstand wird in 150ml heißem Ethanol gelöst. Beim Abkühlen kristallisieren 15g **IVb** in ca. 90%iger Reinheit. Erneutes Umkristallisieren aus Ethanol ergibt 12,6g (25%) **IVb,** Schmelzbereich 94-97,5°C.

### Herstellung von Ib (R=Decyl):

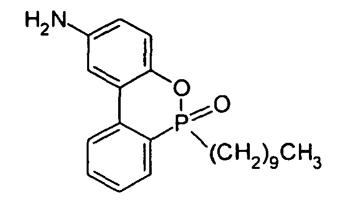

In einen mit Stickstoff gefüllten Rührautoklaven mit 300 ml Volumen werden 12,4g (0,031 mol) erfindungsgemäß hergestelltes **IVb** sowie 200 ml Ethanol und 0,5g Palladium-Kohle (Pd-Gehalt 10%) gegeben. Dann wird der Stickstoff durch Wasserstoff verdrängt, der Rührer angestellt, ein Überdruck von 3 bar erzeugt und auf 40 °C erwärmt. Es wird 20 h unter Rühren hydriert, wobei ein Überdruck von 3 bar durch automatisches Nachdosieren von Wasserstoff (max. 10 ml / min) aufrechterhalten wird. Die Reaktionstemperatur von 40°C wird mit einem Thermostaten konstant gehalten. Zum Ende der Reaktionszeit ist keine Wasserstoffaufnahme mehr zu beobachten. Nach der Reaktion wird der Wasserstoff wieder durch Stickstoff ersetzt. Anschließend wird die noch warme Mischung aus dem Autoklaven entnommen und unter Inertbedingungen durch eine ca. 1 cm dicke Schicht Kieselgel filtriert um den Katalysator vollständig zu entfernen. Danach wird das Lösungsmittel abdestilliert, und der Rückstand wird 2 h im Feinvakuum auf 120°C erwärmt. Erhalten werden 12,1g hellbrauner Rückstand, in welchem die Substanz **Ib** zu 95% enthalten ist. Eine dunkle Verunreinigung wird durch Säulenchromatographie über eine sehr kurze Säule entfernt (Kieselgel; Essigsäureethylester, Methylenchlorid ca. 1 / 2). Dann wird die Substanz aus einer Mischung von n-Hexan und Methylenchlorid umkristallisiert, und schließlich im Vakuum auf ca. 80°C erwärmt. Erhalten werden 11,3g (89%) **Ib** mit einem Schmelzpunkt von 108-110°C.

### Beispiel 3

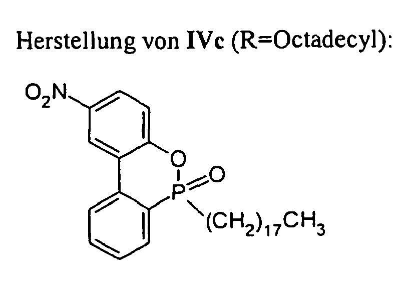

In einem 500ml Dreihals-Rundkolben, der mit einem Magnetrührer, einem Thermometer, einem Tropftrichter sowie einer Gasableitung ausgerüstet ist, werden 32,81 g (0,07mol) **IIIc** mit 86g Essigsäureanhydrid und 17g Eiseesig vermischt. Zu der auf 10°C gekühlten Mischung werden unter kräftigem Rühren 17,6 g (0,028 mol) 100%ige Salpetersäure getropft, wobei die Temperatur der Mischung bei 10-15°C gehalten wird. Nach Beendigung des Zutropfens wird die Lösung im Verlauf von 2 h auf 50°C erwärmt. Diese Temperatur wird noch weitere 5 h gehalten, wobei eine mäßige Freisetzung nitroser Gase auftritt und sich ein körniger Feststoff ausscheidet. Dieser besteht zu ca. 90% aus **IVc.** In Lösung verbleiben neben unumgesetztem Ausgangsstoff das in Ortho-Position nitrierte Produkt sowie geringe Mengen anderer Nitrierungsprodukte. Zur Isolierung von **IVc** wird der ausgeschiedene Feststoff mit einer Glasfritte abfiltriert, anschließend mit Wasser gewaschen und 3 h bei 100°C im Vakuum getrocknet. Das Rohprodukt wird schließlich aus Ethanol umkristallisiert. Erhalten werden 12g (33%) **IVc** mit einem Schmelzpunkt von 109-111,5°C.

### Herstellung von Ic (R=Octadecyl):

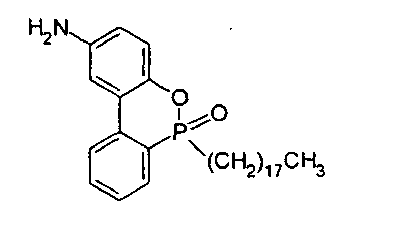

In einen mit Stickstoff gefüllten Rührautoklaven mit 300 ml Volumen werden 9,8g (0,019 mol) erfindungsgemäß hergestelltes **IVc** sowie 200 ml Ethanol und 0,5g Palladium-Kohle (Pd-Gehalt 10%) gegeben. Dann wird der Stickstoff durch Wasserstoff verdrängt, der Rührer angestellt, ein Überdruck von 3 bar erzeugt und auf 40 °C erwärmt. Es wird 20 h unter Rühren hydriert, wobei ein Überdruck von 3 bar durch automatisches Nachdosieren von Wasserstoff (max. 10 ml / min) aufrechterhalten wird. Die Reaktionstemperatur von 40°C wird mit einem Thermostaten konstant gehalten. Zum Ende der Reaktionszeit ist keine Wasserstoffaufnahme mehr zu beobachten. Nach der Reaktion wird der Wasserstoff wieder durch Stickstoff ersetzt. Anschließend wird die erhaltene Suspension in einen mit Argon gefüllten Kolben überführt und auf ca. 70°C erwärmt, wobei sich das Rohprodukt auflöst. Anschließend wird unter Inertbedingungen durch eine ca. 1 cm dicke Schicht Kieselgel filtriert um den Katalysator vollständig zu entfernen. Danach wird das Lösungsmittel abdestilliert, und der Rückstand wird 2 h im Feinvakuum auf 120°C erwärmt. Erhalten werden 8,4g sandfarbener Rückstand, in welchem die Substanz **Ic** zu 90% enthalten ist. Eine dunkle Verunreinigung wird durch Säulenchromatographie über eine sehr kurze Säule entfernt (Kieselgel; Essigsäureethylester, Methylenchlorid ca. 2 / 1 ). Nach Abdestillieren der Lösungsmittel und Erwärmen im Vakuum auf 70°C werden 8,0g **Ic** erhalten (81%). Die so isolierte Verbindung **Ic** hat einen Schmelzbereich von 104-111 °C (Produkt-Reinheit ca.95%).

### Beispiel 4

### Herstellung von VIa (X=n-Butylen, y=1):

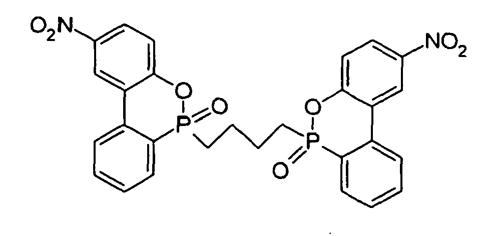

In einem 500ml Dreihals-Rundkolben, der mit einem Magnetrührer, einem Thermometer, einem Tropftrichter sowie einer Gasableitung ausgerüstet ist, werden 60,81g (0,125 mol) **Va** mit 255g Essigsäureanhydrid vermischt. Zu der auf 15°C gekühlten Suspension werden unter kräftigem Rühren innerhalb von 30 min 78,8g (1,25 mol) 100%ige Salpetersäure getropft, wobei die Temperatur der Mischung durch äußere Kühlung des Reaktionskolbens bei 15-20°C gehalten wird und sich der Ausgangsstoff auflöst. Nach Beendigung des Zutropfens wird die Temperatur der Mischung noch 30 min bei 20°C gehalten und anschließend im Verlauf von 2 h auf 45°C erhöht. Diese Temperatur wird noch weitere 3 h gehalten. Während der Umsetzung scheidet sich ein körniger Feststoff aus der Mischung aus. Zudem erfolgt eine mäßige Freisetzung nitroser Gase, welche in den Abzug abgeleitet werden. Nach beendeter Reaktion und Abkühlen der Mischung auf ca. 0°C wird der ausgeschiedene gelbliche Feststoff mit einer Glasfritte abgesaugt, gründlich mit Wasser gewaschen und bei 120°C im Vakuum getrocknet. Es werden 31,4 g (44%) **VIa** erhalten. In dieser Substanz befinden sich ca. 90% der Nitrogruppen in Paraposition bezüglich der Brücken-Sauerstoffatome in den phosphorhaltigen Ringsystemen. Im salpetersauren Filtrat sind das an einer Seite des Moleküls sowie das beidseitig orthosubstituierte Isomer enthalten.

### Herstellung von IIa (X=n-Butylen, y=1):

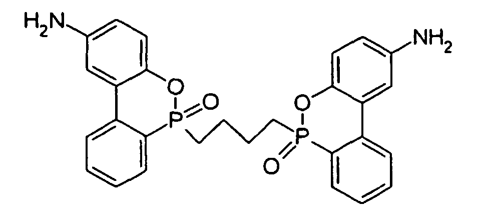

11,5g (0,02 mol) erfindungsgemäß hergestelltes **VIa** mit einer Isomeren-Reinheit von ca. 90% werden in 150 ml N,N-Dimethylacetamid bei etwa 120°C gelöst. Die Lösung wird auf Raumtemperatur gekühlt und in einen mit Stickstoff gefüllten Rührautoklaven (Inhalt 300 ml) gefüllt. Nach Zugabe von 0,7g Palladium-Kohle (Pd-Gehalt 10%) wird der Stickstoff durch Wasserstoff verdrängt, der Rührer angestellt, ein Überdruck von 3 bar erzeugt und auf 40 °C erwärmt. Es wird 20 h unter Rühren hydriert, wobei ein Überdruck von 3 bar durch automatisches Nachdosieren von Wasserstoff (max. 10 ml / min) aufrechterhalten wird. Die Reaktionstemperatur von 40°C wird mit einem Thermostaten konstant gehalten. Zum Ende der Reaktionszeit ist keine Wasserstoffaufnahme mehr zu beobachten. Nach der Reaktion wird der Wasserstoff wieder durch Stickstoff ersetzt. Anschließend wird die erhaltene braune Lösung in einen mit Argon gefüllten Kolben überführt. Sie wird dann durch eine ca. 3 cm dicke Schicht Aluminiumoxid (neutral, zur Säulenchromatographie geeignet) filtriert um den Katalysator sowie dunkle Verunreinigungen abzutrennen. Durch die Aluminiumoxidschicht werden noch ca. 100ml N,N-Dimethylacetamid gesaugt. Die Filtrate werden vereinigt und das Lösungsmittels wird im Vakuum abdestilliert. Es werden 9g orange-gelber amorpher Feststoff erhalten, welcher zu etwa 85% aus dem Diamin **IIa** besteht. Zu diesem Rohprodukt werden 70 ml heißes Ethanol gegeben. Nach dem Abkühlen wird der ausgeschiedene hellgelbe Feststoff abgesaugt und 5 h auf 130°C im Vakuum erhitzt. Erhalten werden 7,5g (73%) **IIIa** mit einer Reinheit von ca. 93%.

### Beispiel 5

### Herstellung von VIb (X=Terephthalsäure-diethylester-diyl, y=1):

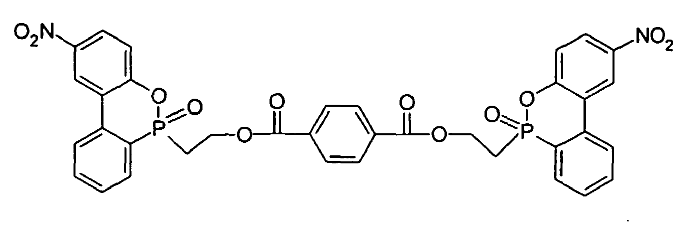

In einem 100ml Dreihals-Rundkolben, der mit einem Magnetrührer, einem Thermometer, einem Tropftrichter sowie einer Gasableitung ausgerüstet ist, werden 11,4g (0,0175 mol) **Vb** mit 36g Essigsäureanhydrid vermischt. Zu der auf 15°C gekühlten Suspension werden unter kräftigem Rühren im Verlauf von 15 min 11,0g (0,175 mol) 100%ige Salpetersäure getropft, wobei die Temperatur der Mischung durch äußere Kühlung des Reaktionskolbens bei ca. 15°C gehalten wird. Nach Beendigung der Säurezugabe wird die Temperatur noch 15 min bei 12-15°C gehalten und dann innerhalb von 75 min auf 45°C gesteigert. Anschließend wird noch 3h bei 45-47°C gerührt, wobei sich der Anteil an ungelöster Substanz in der Mischung erhöht und eine mäßige Freisetzung nitroser Gase auftritt. Nach Beendigung der Reaktion wird die Suspension in eine Mischung aus ca. 300g Eis und 30g Natriumacetat gerührt. Nach dem Schmelzen des Eises wird die salpetersaure wässrige Lösung abdekantiert, dreimal mit Chloroform extrahiert und dann verworfen. Die ausgeschiedene klebrige Substanz wird ebenfalls mit Chloroform versetzt. Dabei scheidet sich ein körniger Feststoff aus, welcher abfiltriert wird. Das Filtrat wird mit den Chloroform-Extrakten vereinigt. Dann wird einmal mit 100ml Wasser gewaschen, über wasserfreiem Natriumsulfat getrocknet und das Lösungsmittel abdestilliert. Der erhaltene Rückstand wird mit dem in Chloroform ungelösten Feststoff vereinigt und zusammen mit diesem 5 h im Vakuum auf 130°C erwärmt. Erhalten werden 11,0g amorphe, gelb-braune Substanz, in der ca. 55% des zweifach para-substituierten Isomers **VIb** enthalten sind. Zudem enthält der Feststoff die entsprechenden Isomere mit einer bzw. mit beiden Nitrogruppen in Orthostellung bezüglich der Brückensauerstoff-Atome.

### Herstellung von IIb:

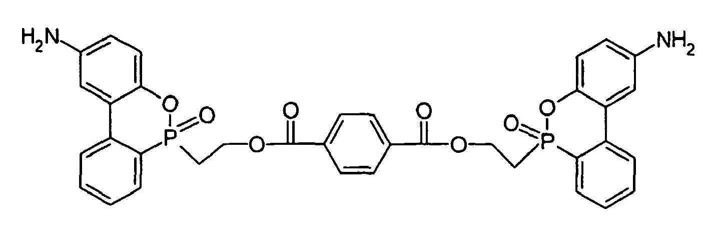

9,33g des bei der Nitrierung von **VIb** erhaltenen Isomeren-Gemisches, welches ca. 5,1g (0,0069 mol) **VIb** enthält, werden in 100 ml N,N-Dimethylacetamid bei etwa 120°C gelöst. Die Lösung wird auf Raumtemperatur gekühlt und in einen mit Stickstoff gefüllten Rührautoklaven (Inhalt 300 ml) überführt. Nach Zugabe von 0,5 g Palladium-Kohle (Pd-Gehalt 10%) wird der Stickstoff durch Wasserstoff verdrängt, der Rührer angestellt, ein Überdruck von 3 bar erzeugt und auf 40 °C erwärmt. Es wird 20 h unter Rühren hydriert, wobei ein Überdruck von 3 bar durch automatisches Nachdosieren von Wasserstoff (max. 10 ml / min) aufrechterhalten wird. Die Reaktionstemperatur von 40°C wird mit einem Thermostaten konstant gehalten. Zum Ende der Reaktionszeit ist keine Wasserstoffaufnahme mehr zu beobachten. Nach der Reaktion wird der Wasserstoff wieder durch Stickstoff ersetzt. Anschließend wird die erhaltene braune Lösung in einen mit Argon gefüllten Kolben überführt. Sie wird dann durch eine ca. 4 cm dicke Schicht Aluminiumoxid (neutral, zur Säulenchromatographie geeignet) filtriert um den Katalysator sowie dunkle Verunreinigungen abzutrennen. Durch die Aluminiumoxidschicht werden noch ca. 80ml N,N-Dimethylacetamid gesaugt. Die Filtrate werden vereinigt, im Vakuum auf ein Restvolumen von ca. 50ml eingeengt und dann in 400ml einer 10%igen wässrigen Natriumchlorid-Lösung gerührt. Der ausgeschiedene Feststoff wird abfiltriert, mit Wasser gewaschen und im Vakuum getrocknet. Dann wird er mit 150 ml Chloroform versetzt, wobei etwas dunkle Substanz ungelöst bleibt. Die Chloroform-Lösung wird abdekantiert und durch eine 1 cm dicke Schicht Aluminiumoxid filtriert. Es wird mit ca. 50 ml Chloroform nachgewaschen. Danach wird das Chloroform abdestilliert und der Rückstand im Vakuum erwärmt. Dieser wird aus Ethanol umkristallisiert. Erhalten werden 3,3g gelblicher Feststoff, welcher zu etwa 90% aus dem Diamin **IIb** besteht (Ausbeute ca. 60%).

### Beispiel 6

Herstellung von **VIc** (X=Isocyanursäuretriethylester-triyl, y=2) als Gemisch folgender isomerer Trinitroverbindungen

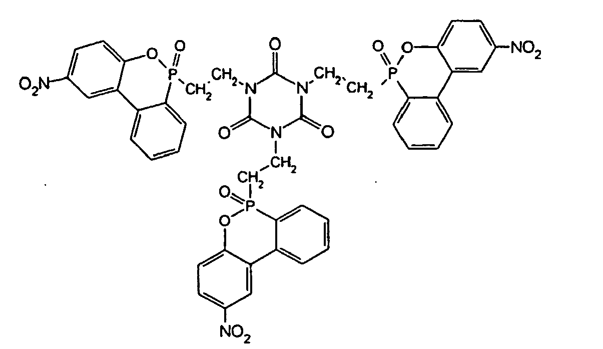

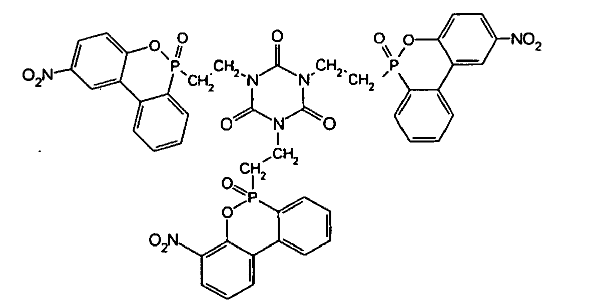

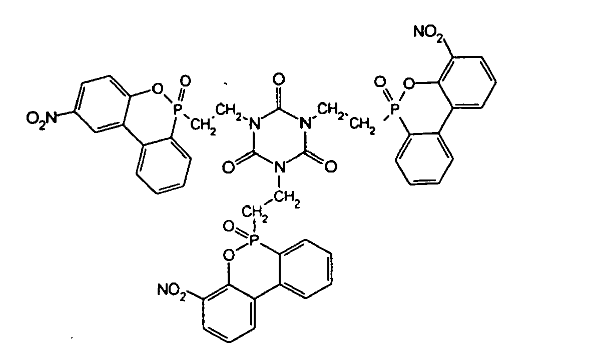

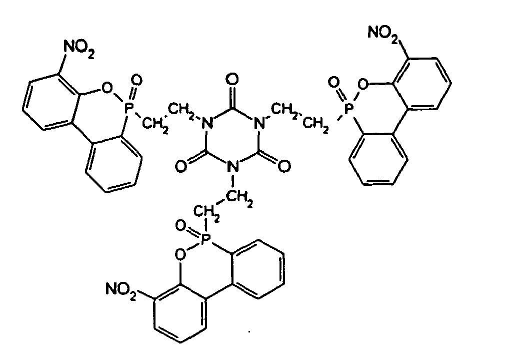

In einem 250 ml Dreihals-Rundkolben, der mit einem Magnetrührer, einem Thermometer, einem Tropftrichter sowie einer Gasableitung ausgerüstet ist, werden 21,4g (0,025 mol) **Vc** mit 77g (0,75 mol) Acetanhydrid vermischt. Dann werden zu der auf 15°C gekühlten Suspension unter kräftigem Rühren 23,6g (0,375 mol) 100%ige Salpetersäure im Verlauf von 20 min getropft. Dabei wird die Temperatur der Mischung durch Kühlung des Kolbens bei 12-17°C gehalten, und es entsteht eine klare orange-gelbe Lösung. Die Temperatur der Lösung wird weitere 20 min bei ca. 15°C gehalten und dann innerhalb von 2 h auf 40°C gesteigert. Anschließend wird die Mischung noch 3 h bei 40°C gerührt. Während der Umsetzung erfolgt eine mäßige Freisetzung nitroser Gase, welche in den Abzug abgeleitet werden. Danach wird die hellbraune Lösung in ca. 600g Eis, dem etwas Natriumchlorid und Natriumacetat zugesetzt worden ist, gerührt, und es scheidet sich eine gelbe klebrige Substanz aus. Diese wird nach dem Schmelzen des Eises und dem Abdekantieren der wässrigen Lösung in 200 ml Chloroform gelöst (eine geringe Menge Substanz bleibt ungelöst und wird verworfen). Die wässrige Lösung wird in einen Scheidetrichter überführt und zweimal mit jeweils 100 ml Chloroform extrahiert. Dann werden alle Chloroform-Lösungen vereinigt und mit 100 ml Wasser gewaschen. Dabei scheidet sich ein flockiger Feststoff aus, der abfiltriert, mit Wasser gewaschen und getrocknet wird. Die vereinigten Chloroform-Lösungen werden über wasserfreiem Natriumsulfat getrocknet, und nach dem Entfernen des Trockenmittels wird das Chloroform abdestilliert. Der ölige Rückstand wird mit dem abfiltrierten Feststoff vereinigt und 5 h im Vakuum (ca. 1 mbar) auf 120°C erwärmt. Erhalten wird eine bräunlich-gelbe amorphe Substanz, welche zu ca. 93% die isomeren Trinitroverbindungen **VIc** enthält.

Herstellung von **IIc** als Gemisch folgender isomerer Triaminoverbindungen

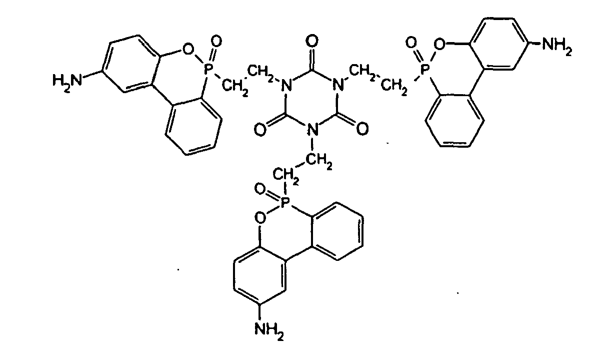

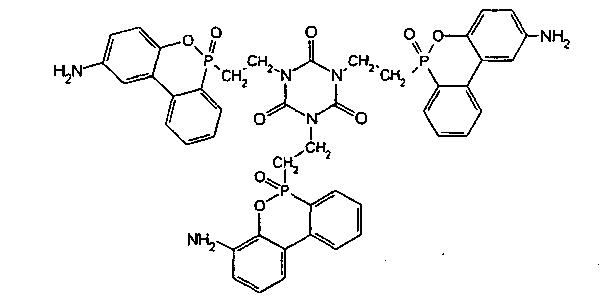

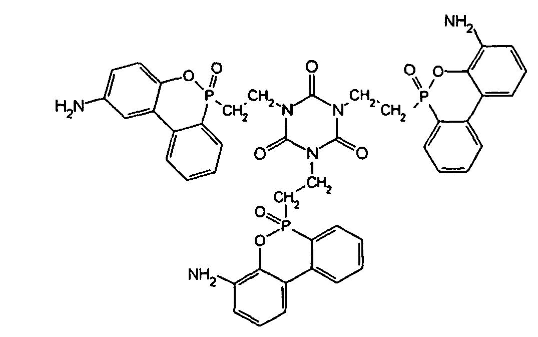

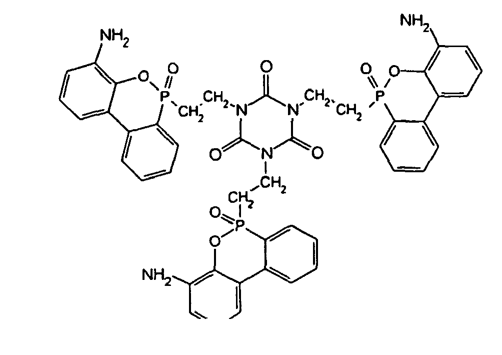

19,8g (0,02 mol) des Isomerengemisches **VIc** werden in 150 ml N,N-Dimethylacetamid gelöst. Diese Lösung wird in einen Rührautoklaven, der ein Volumen von 300 ml hat und mit Stickstoff gefüllt ist, gegeben. Anschließend wird 0,6g Palladiumkohle (Pd-Gehalt 10%) zugesetzt. Nachdem der Stickstoff durch Wasserstoff verdrängt worden ist, wird der Rührer angestellt, ein Überdruck von 3 bar aufgebaut und auf 40°C erwärmt. Bei dieser Temperatur wird unter kräftigem Rühren 15 h hydriert, wobei automatisch Wasserstoff nachdosiert wird (max. 10 ml / min), so dass der Druck die gesamte Reaktionszeit 3 bar beträgt. Dann wird der Autokalveninhalt zweimal unter Inertbedingungen durch eine dünne Schicht Kieselgel filtriert um den Katalysator vollständig zu entfernen. Die Kieselgelschicht wird einmal mit 50 ml N,N-Dimethylacetamid gewaschen. Dann werden die vereinigten Filtrate auf ein Drittel des Ausgangsvolumens eingeengt. Die hellbraune Lösung wird in 500 ml Wasser, dem etwas Natriumchlorid zugesetzt worden ist, gerührt. Es scheidet sich ein gelblicher Feststoff aus, der abgesaugt und mit Wasser gewaschen wird. Dieser wird 4 h im Vakuum auf 120°C erwärmt. Erhalten werden 16g hellgelber Feststoff, welcher zu ca. 85% aus den isomeren Triaminen **IIc** besteht.

## Patentansprüche

1. Verbindungen der allgemeinen Formel I 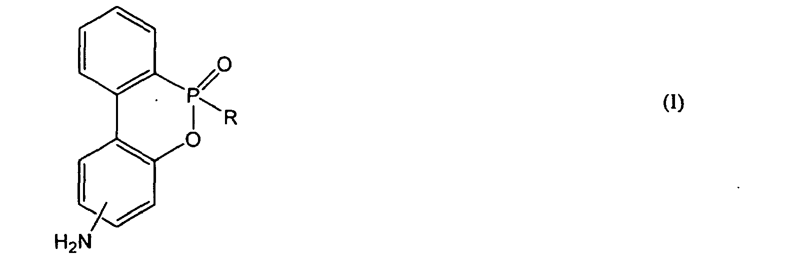 worin R ein Wasserstoffatom oder einer der folgenden Reste: (CH₂)ₘCH₃, (CH₂)ₙO(CH₂)ₘCH₃, 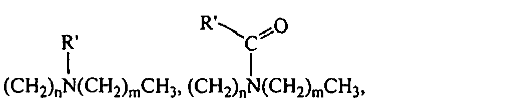 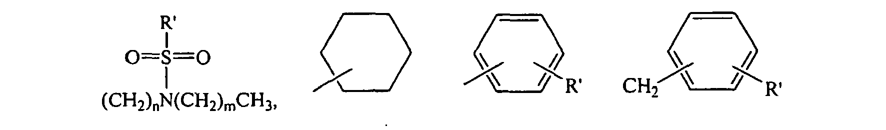
n eine ganze Zahl von 1 bis 10,
m eine ganze Zahl von 0 bis 20,
R¹= Alkyl oder Aryl
bedeuten und die Aminogruppe in o- und/oder p-Stellung zum Ringsauerstoffatom steht.

2. Verbindung nach Anspruch 1, worin R eine Alkylgruppe mit 1 bis 18 C-Atomen ist.

3. Verbindung nach Anspruch 1 oder 2, worin die Aminogruppe in p-Stellung zum Ringsauerstoffatom steht.

4. Verbindungen der allgemeinen Formel II 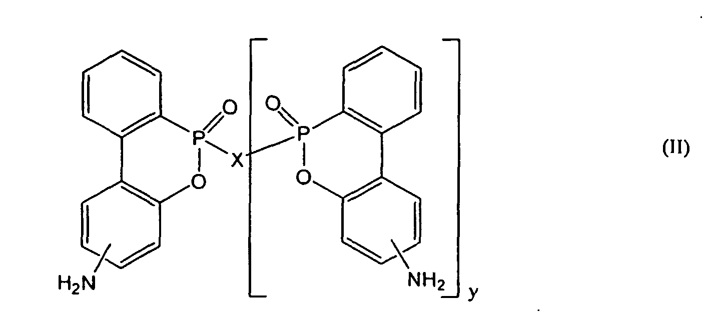 worin y die Zahl 1 oder 2 ist und
X, wenn y = 1, einer der folgenden Reste: (CH₂)ₙ,(CH₂)ₙO(CH₂)ₘ, 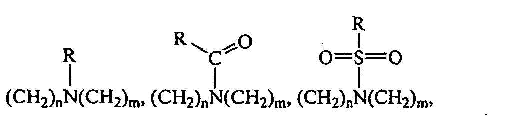 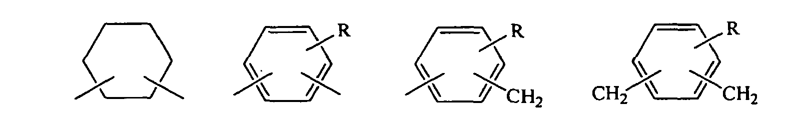 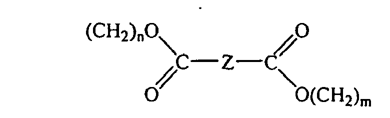 (CH₂)ₙO-Z-O(CH₂)ₘ ist, worin
n und m jeweils unabhängig voneinander eine ganze Zahl von 1 bis 10,
R = Alkyl oder Aryl,
Z = eine aliphatische, cycloaliphatische oder aromatische Brücke
bedeuten und
X, wenn y = 2, einer der folgenden Reste: 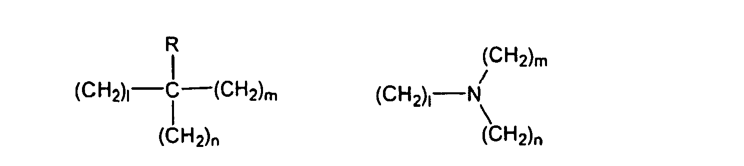 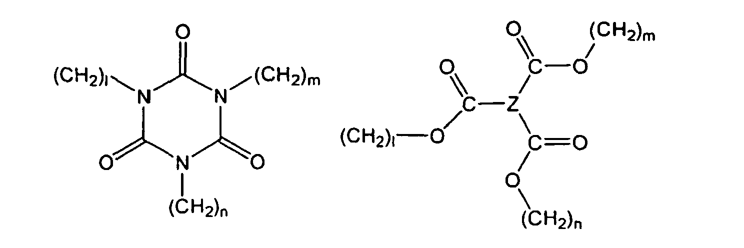 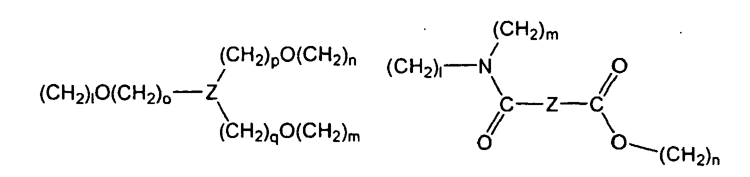 ist, worin
1, n und m jeweils unabhängig voneinander eine ganze Zahl von 1 bis 10,
o, p und q jeweils unabhängig voneinander eine ganze Zahl von 0 bis 10,
R = Alkyl oder Aryl,
Z = eine aliphatische, cycloaliphatische oder aromatische Brücke
bedeuten,
und die Aminogruppen jeweils in o- und/oder p-Stellung zum zugehörigen Ringsauerstoffatom stehen.

5. Verbindung nach Anspruch 4, worin y = 1 und X eine n-Butylengruppe ist.

6. Verbindung nach Anspruch 4, worin y = 1 und X ein Rest des Terephthalsäurediethylesters der Formel 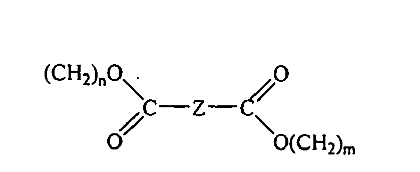 mit n = 2 und Z = Phenylen ist.

7. Verbindung nach einem der Ansprüche 4 bis 6, worin die Aminogruppen in p-Stellung stehen.

8. Verbindung nach Anspruch 4, worin y = 2 und X ein Rest des Isocyanursäuretriethylesters der Formel 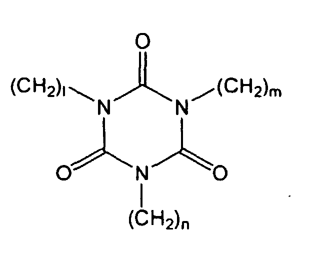 mitl=n=m=2 ist.

9. Verfahren zur Herstellung der Verbindungen der Formel I gemäß einem der Ansprüche 1 bis 3, bei dem ein 6H-Dibenz[c,e][1,2]-oxaphosphorin-6-oxid der Formel III, worin der Substituent R die in Anspruch 1 angegebenen Bedeutungen besitzt, durch direkte Nitrierung in die entsprechende Nitroverbindung der Formel IV übergeführt wird, welche anschließend durch katalytische Hydrierung zur gewünschten Aminoverbindung der Formel I reduziert wird.

10. Verfahren zur Herstellung der Verbindungen der Formel II gemäß einem der Ansprüche 4 bis 8, bei dem eine Verbindung der Formel V, worin X und y die in Anspruch 4 angegebenen Bedeutungen besitzen, durch direkte Nitrierung in die entsprechende Nitroverbindung der Formel VI übergeführt wird, welche anschließend durch katalytische Hydrierung zur gewünschten Aminoverbindung der Formel II reduziert wird.

11. Verfahren nach Anspruch 9 oder 10, bei dem die Nitrierung mit einem Gemisch aus 100%iger Salpetersäure und Acetanhydrid als Nitrierungsmittel durchgeführt wird.

12. Verwendung der Verbindungen gemäß einem der Ansprüche 1 bis 8 als reaktives Flammschutzmittel für Polymere und daraus hergestellte Erzeugnisse.

13. Verwendung nach Anspruch 12 für Polyester, Polyamide und Epoxidharze und daraus hergestellte Erzeugnisse.

14. Verwendung der Verbindungen gemäß einem der Ansprüche 1 bis 8 als Härter für Epoxidharze.

15. Verwendung der Verbindungen gemäß einem der Ansprüche 1 bis 8 als Additiv für Epoxidharze zu deren gleichzeitiger Flammfestmachung und Härtung.

## Claims

1. Compounds of the general formula I 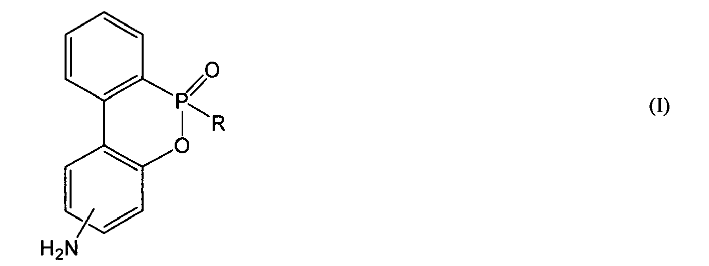 wherein
R denotes a hydrogen atom or one of the following residues: (OH₂)ₘCH₃, (OH₂)ₙO(CH₂)ₘCH₃, 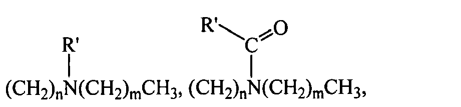 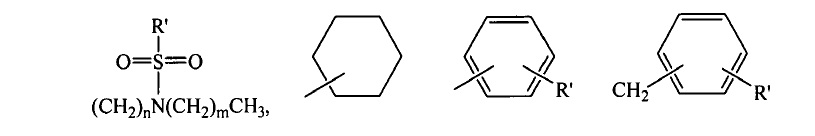
n denotes an integer of from 1 to 10,
m denotes an integer of from 0 to 20,
R' = alkyl or aryl,
and the amino group is in the o-position and/or p-position in relation to the ring oxygen atom.

2. The compound according to claim 1, wherein R is an alkyl group having 1 to 18 C atoms.

3. The compound according to claim 1 or 2, wherein the amino group is in the p-position in relation to the ring oxygen atom.

4. Compounds of the general formula II 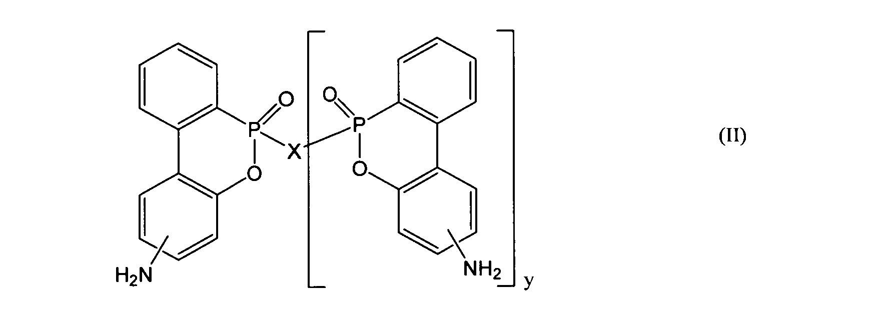 wherein
y is the number 1 or 2, and
X, if y = 1, is one of the following residues: (CH₂)ₙ, OH₂)ₙO(CH₂)_{m,} (CH₂)ₙN(CH₂)ₘ, 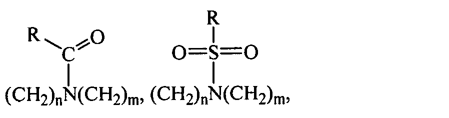 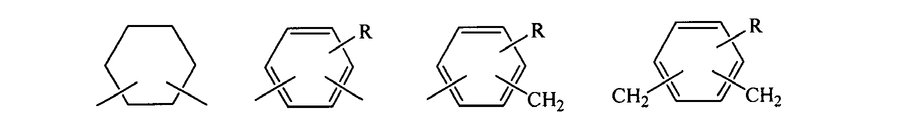 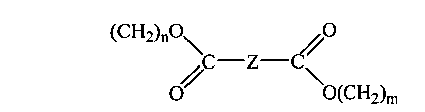 (CH₂)ₙO-Z-O(CH₂)ₘ wherein
n and m, each independently of one another, denote an integer of from 1 to 10,
R = alkyl or aryl,
Z = an aliphatic, cycloaliphatic or aromatic bridge,
and
X, if y = 2, is one of the following residues: 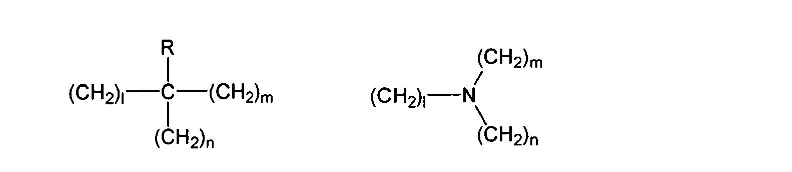 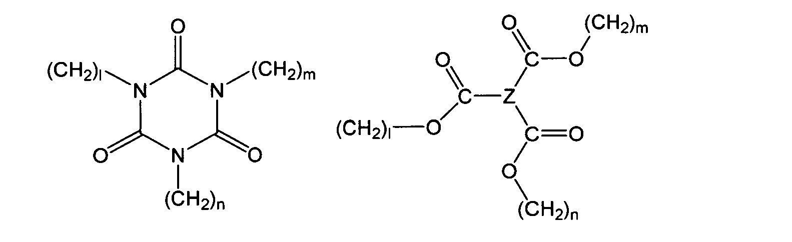 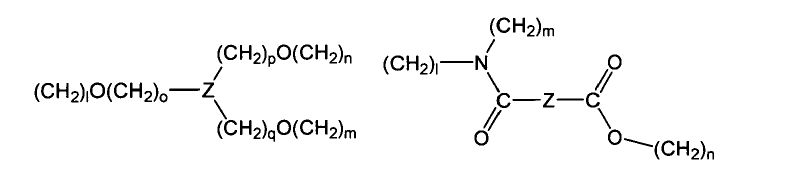
wherein
I, n and m, each independently of one another, denote an integer of from 1 to 10,
o, p and q, each independently of one another, denote an integer of from 0 to 10,
R = alkyl or aryl,
Z = an aliphatic, cycloaliphatic or aromatic bridge,
and each of the amino groups is in the o-position and/or p-position in relation to the associated ring oxygen atom.

5. The compound according to claim 4, wherein y = 1 and X is an n-butylene group.

6. The compound according to claim 4, wherein y = 1 and X is a residue of the terephthalic acid diethyl ester of the formula 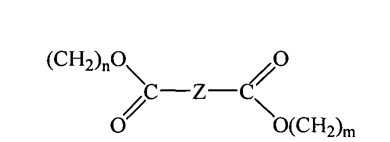 wherein n = 2 and Z = phenylene.

7. The compound according to any of claims 4 to 6, wherein the amino groups are in the p-position.

8. The compound according to claim 4, wherein y = 2 and X is a residue of the isocyanuric acid triethyl ester of the formula 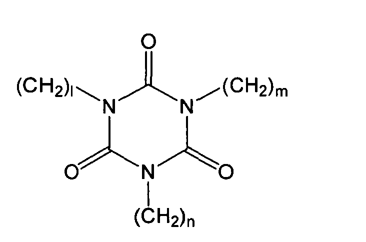 wherein I = n = m = 2.

9. A method of preparing the compounds of the formula I according to any of claims 1 to 3, wherein a 6H-dibenz[c,e][1,2]-oxaphosphorine-6-oxide of the formula III, wherein the substituent R has the meanings indicated in claim 1, is transformed by direct nitration into the corresponding nitro compound of the formula IV, which is subsequently reduced to the desired amino compound of the formula I by catalytic hydrogenation.

10. A method of preparing the compounds of the formula II according to any of claims 4 to 8, wherein a compound of the formula V, wherein X and y have the meanings indicated in claim 4, is transformed by direct nitration into the corresponding nitro compound of the formula VI, which is subsequently reduced to the desired amino compound of the formula II by catalytic hydrogenation.

11. The method according to claim 9 or 10, wherein the nitration is carried out with a mixture of 100 percent nitric acid and acetic anhydride as the nitrating agent.

12. Use of the compounds according to any of claims 1 to 8 as a reactive flame retardant for polymers and products manufactured therefrom.

13. Use according to claim 12 for polyesters, polyamides and epoxy resins and products manufactured therefrom.

14. Use of the compounds according to any of claims 1 to 8 as a curing agent for epoxy resins.

15. Use of the compounds according to any of claims 1 to 8 as an additive for epoxy resins for the simultaneous flameproofing and curing thereof.

## Revendications

1. Composés de formule générale I 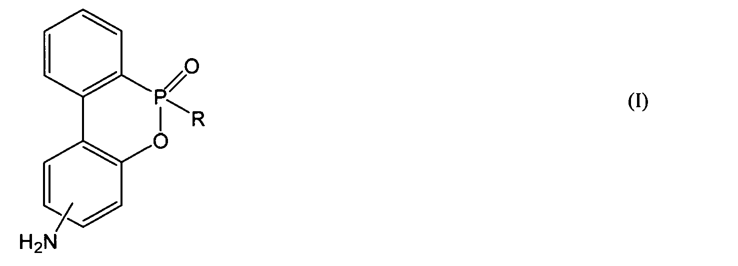 dans lesquels
R désigne un atome d'hydrogène ou un des radicaux suivants : (OH₂)ₘCH₃, (CH₂)ₙO(CH₂)ₘCH₃, 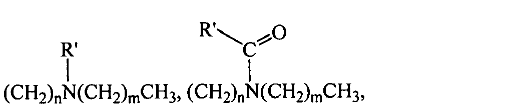 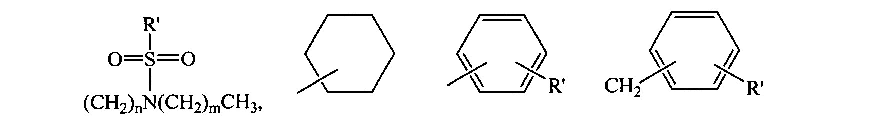
n désigne un nombre entier compris entre 1 et 10,
m désigne un nombre entier compris entre 0 et 20,
R' = alkyle ou aryle,
et le groupe amino se trouve en position ortho et/ou en position para par rapport à l'atome d'oxygène de cycle.

2. Composé selon la revendication 1, dans lequel R est un groupe alkyle ayant 1 à 18 atomes de carbone.

3. Composé selon la revendication 1 ou 2, dans lequel le groupe amino se trouve en position para par rapport à l'atome d'oxygène de cycle.

4. Composés de formule générale II 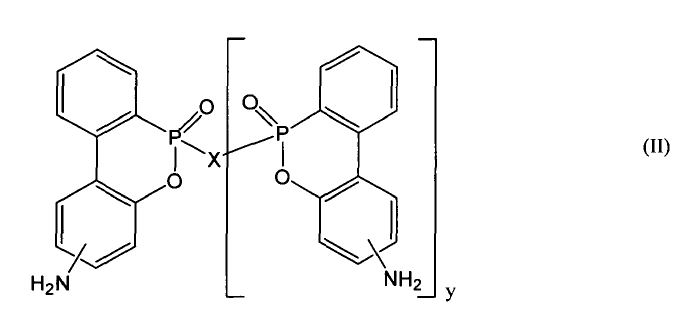 dans lesquels
y est le nombre 1 ou 2, et
X, lorsque y = 1, est l'un des radicaux suivants : (CH₂)ₙ, (CH₂)ₙO(CH₂)ₘ, 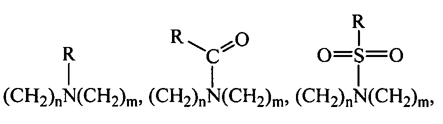 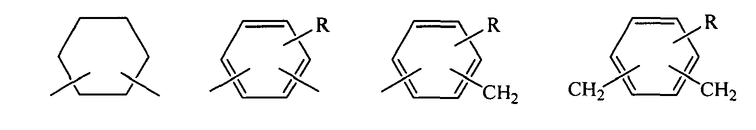 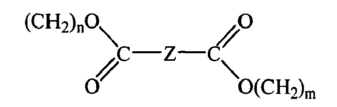 (CH₂)ₙO-Z-O(CH₂)ₘ
dans lesquels
n et m désignent chacun indépendamment l'un de l'autre un nombre entier compris entre 1 et 10,
R = alkyle ou aryle,
Z = un pont aliphatique, cycloaliphatique ou aromatique,
et
X, lorsque y = 2, est l'un des radicaux suivants : 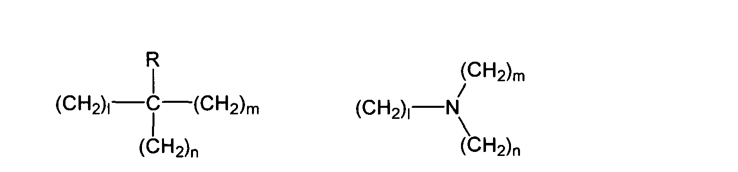 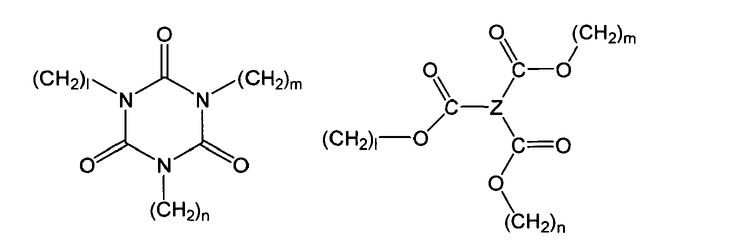 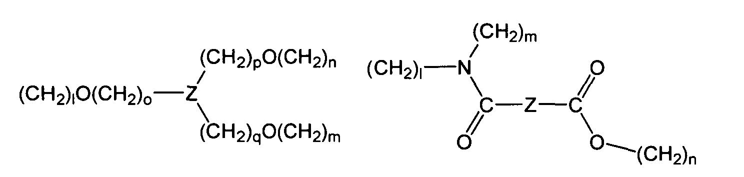
dans lesquels
1, n et m désignent chacun indépendamment l'un de l'autre un nombre entier compris entre 1 et 10,
o, p et q désignent chacun indépendamment l'un de l'autre un nombre entier compris entre 0 et 10,
R = alkyle ou aryle,
Z = un pont aliphatique, cycloaliphatique ou aromatique,
et les groupes amino se trouvent chacun dans une position ortho et/ou une position para par rapport à l'atome d'oxygène de cycle associé.

5. Composé selon la revendication 4, dans lequel y = 1 et X est un groupe n-butylène.

6. Composé selon la revendication 4, dans lequel y = 1 et X est un radical de l'ester diéthylique de l'acide téréphtalique de formule 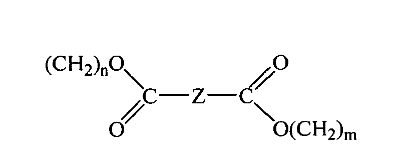 avec n = 2 et Z = phenylène.

7. Composé selon l'une des revendications 4 à 6, dans lequel les groupes amino se trouvent en position para.

8. Composé selon la revendication 4, dans lequel y = 2 et X est un radical de l'ester triéthylique de l'acide isocyanurique de formule 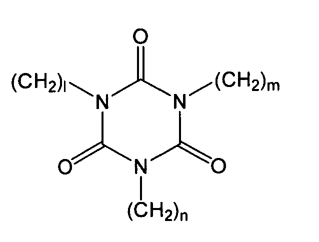 avec l = n = m = 2.

9. Procédé de fabrication des composés de formule I selon l'une des revendications 1 à 3, dans lequel un 6H-dibenzo[c,e][1,2]-oxa-phosphorine-6-oxide de formule III, où le substituant R a les significations indiquées à la revendication 1, est transformé par nitration directe en le composé nitré correspondant de formule IV, lequel est ensuite réduit par hydrogénation catalytique de manière à obtenir le composé aminé souhaité de formule I.

10. Procédé de fabrication des composés de formule II selon l'une des revendications 4 à 8, dans lequel un composé de formule V, où X et y ont les significations indiquées à la revendication 4, est transformé par nitration directe en le composé nitré correspondant de formule VI, lequel est ensuite réduit par hydrogénation catalytique de manière à obtenir le composé aminé souhaité de formule II.

11. Procédé selon la revendication 9 ou 10, dans lequel la nitration est effectuée à l'aide d'un mélange d'acide nitrique 100% et d'anhydride acétique en tant qu'agent de nitration.

12. Utilisation des composés selon l'une des revendications 1 à 8 en tant qu'agent ignifuge réactif pour des polymères et des produits préparés à partir de ceux-ci.

13. Utilisation selon la revendication 12 pour des polyesters, des polyamides et des résines époxy ainsi que pour des produits préparés à partir de ceux-ci.

14. Utilisation des composés selon l'une des revendications 1 à 8 en tant qu'agent durcisseur pour des résines époxy.

15. Utilisation des composés selon l'une des revendications 1 à 8 en tant qu'additif pour des résines époxy pour les rendre ignifuges et les durcir simultanément.
